# EUROPÄISCHE PATENTSCHRIFT

(11) **EP 3 164 306 B1**
(45) Veröffentlichungstag und Bekanntmachung des Hinweises auf die Patenterteilung: **03.03.2021**
(21) Anmeldenummer: 15735909.2
(22) Anmeldetag: 02.07.2015
(51) Int. Cl.: B60T 17/00, B60T 17/22

(54) **VERFAHREN UND VORRICHTUNG ZUR FEHLERERKENNUNG IN DRUCKLUFTSYSTEMEN**
METHOD AND DEVICE FOR IDENTIFYING FAULTS IN A PNEUMATIC SYSTEM
PROCÉDÉ ET DISPOSITIF DE DÉTECTION D'ERREUR DANS DES SYSTÈMES D'AIR COMPRIMÉ

(30) Priorität: 04.07.2014 DE 102014009991
(43) Veröffentlichungstag der Anmeldung: 10.05.2017
(73) Patentinhaber: KNORR-BREMSE Systeme für Nutzfahrzeuge GmbH, 80809 München (DE)
(72) Erfinder: BORDACS, Zoltan, H-8200 Veszprém (HU); VIG, Gabor, H-1119 Budapest (HU)
(86) Internationale Anmeldenummer: PCT/EP2015/065111
(87) Internationale Veröffentlichungsnummer: WO 2016/001366

(56) Entgegenhaltungen:
- EP-A1- 2 407 231
- DE-B3-102006 019 865

## Beschreibung

Die vorliegende Erfindung betrifft ein Verfahren zur Erkennung mindestens eines Defekts eines Regenerationspfades eines Druckluftsystems eines Kraftfahrzeugs, wobei zur Regeneration einer Trocknerpatrone Luft aus einem Regenerationsluftreservoir durch die Trocknerpatrone geleitet wird. Ferner betrifft die Erfindung eine Vorrichtung zur Durchführung dieses Verfahrens.

Unter Regeneration wird der Betriebszustand verstanden, in dem eine feuchte Trocknerpatrone durch einen Strom trockener Luft getrocknet wird. Das Regenerationsluftreservoir ist ein Druckluftreservoir, aus dem trockene Luft entnehmbar ist, die dazu vorgesehen ist, während der Regeneration entgegen der im Betrieb üblichen Luftströmungsrichtung über einen Regenerationspfad durch die Trocknerpatrone zu strömen.

Das Einsatzgebiet der Erfindung erstreckt sich auf Kompressoren aufweisende Nutzfahrzeuge. Die durch solche Kompressoren bereitgestellte Luft kann Flüssigkeit in Form von Dämpfen oder Aerosolpartikeln enthalten, die an Elemente wie beispielsweise Ventile oder Dämpfungsmittel oder Luftleitungen geleitet werden, die für den Kontakt mit feuchter Luft nicht konzipiert sind und dabei Schaden nehmen können.

### Stand der Technik

Um daher die Druckluft zu trocknen, werden im allgemein bekannten Stand der Technik Trocknungsmittel wie Trocknerpatronen benutzt, die mit einem flüssigkeitsaufnahmefähigen Material gefüllt sind. Indem ein Flüssigkeit enthaltender Druckluftstrom durch ein solches Material innerhalb einer Trocknerpatrone geleitet wird, wird dieser effektiv von seinen flüssigen Komponenten befreit. Wechselseitig wird sich dadurch allerdings die Trocknerpatrone mit Flüssigkeit anfüllen, bis eine Sättigung erreicht ist, ab der die Trocknerpatrone mindestens unzureichend oder auch gar keine Flüssigkeit mehr aufnimmt und somit ihre Filterwirkung verliert. Um diesem Zustand entgegenzuwirken, wird eine Regeneration durchgeführt, die darin besteht, dass trockene Luft, im Allgemeinen aus der Gegenrichtung der im normalen Betrieb vorgesehen Strömungsrichtung der Druckluft, beispielsweise mit trockener Druckluft aus einem Regenerationsreservoir, durch die feuchte Trocknerpatrone geleitet wird, um die Feuchtigkeit des Materials in der Trocknerpatrone aufzunehmen beziehungsweise abzutragen.

Hierbei kann es entlang des gesamten Strömungswegs aufgrund von Defekten wie beispielsweise Verstopfungen, Vereisungen, Verklemmungen oder Verschleiß zu einer beeinträchtigten Effektivität der Regeneration beziehungsweise deren Trocknungsleistung kommen.

Die DE 10 2006 019 865 B3 offenbart eine Trocknerpatrone einer Druckluftaufbereitungsanlage, welcher ein Sensor, beispielsweise Temperatursensor, zugeordnet ist, um den Feuchtegrad des Trockenmittels in der Trocknerpatrone zu messen. Hiervon abhängig erfolgt ein Umschalten zwischen einem Druckluftaufbereitungskreislauf und einem Regenerationskreislauf.

Die EP 2 407 231 A1 offenbart eine Druckluftaufbereitungseinrichtung mit zwei Lufttrocknungskartuschen, welche im Wechselbetrieb derart angesteuert werden, dass eine elektronische Steuereinheit einen Regenerationsbetrieb der einen Lufttrocknerkartusche unabhängig von dem Versorgungsbetrieb der anderen Lufttrocknerkartusche steuert.

Es ist die Aufgabe der vorliegenden Erfindung, ein Verfahren und eine Vorrichtung zu schaffen, welches beziehungsweise welche den Regenerationspfad auf Defekte überprüft. Ferner ist es die Aufgabe der Erfindung, gegebenenfalls eine Lösung zu schaffen, welche den Auswirkungen der jeweiligen Defekte auf die Regeneration entgegenwirkt.

### Offenbarung der Erfindung

Die Aufgabe wird ausgehend von einem Verfahren gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder. Eine die Erfindung betreffende Vorrichtung wird in Anspruch 14 beschrieben.

Die Erfindung schließt die technische Lehre ein, dass mindestens eine physikalische Größe der Luft in einer Komponente des Regenerationspfades erfasst wird, und die mindestens eine physikalische Größe durch eine Recheneinheit zur Defekterkennung analysiert wird, und das Resultat der Analyse weiterverwertet wird.

Vorzugsweise wird die physikalische Größe im Regenerationsluftreservoir erfasst. Vorteilhaft an dieser Lösung ist, dass ein Sensor vorgesehen ist, der während der Regeneration mindestens eine physikalische Größe der Druckluft in einem Element des Druckluftsystems, vorzugsweise des Regenerationsluftreservoirs, überwacht und dessen Messwert an einen signalverarbeitungstechnischen Algorithmus, der auf der Recheneinheit ausgeführt wird, weitergegeben wird, mit dem beispielsweise das Auftreten und das Verschwinden eines Defekts diagnostiziert werden kann.

Gemäß einer vorteilhaften Ausführungsform der Erfindung wird die mindestens eine physikalische Größe durch unmittelbare Messung oder durch Messung anderer physikalische Größen und anschließende Berechnung oder Abschätzung oder durch elektronische Übermittlung gewonnen. Die erste Alternative erlaubt eine zuverlässige und schnelle Erfassung der interessierenden physikalische Größe, während die zweite Alternative es erlaubt, gegebenenfalls auf aufwendige Messmethoden wie zusätzliche Sensorik zu verzichten. Beispielsweise kann es möglich sein, durch Messung des Drucks Aussagen über die Temperatur von in einem bekannten Volumen gelagerter Druckluft zu machen.

Gemäß einer die Erfindung verbessernden Maßnahme wird vorgeschlagen, den Algorithmus so zu gestalten, dass dieser die Art des Defekts bestimmt. Dadurch kann eine gezielte Strategie gewählt werden, diesen Defekt beispielsweise zu kompensieren oder zu umgehen.

Weiter wird die Erfindung verbessert, indem der Algorithmus so gestaltet ist, dass dieser den Einfluss des Defekts quantifiziert. Dies kann beispielsweise die austretende Flussdichte von Druckluft an einem Leck sein oder der Strömungswiderstand durch ein verstopftes oder zugefrorenes Ventil oder die Trocknerpatrone. Durch eine solche Quantifizierung kann die Wahl der beispielsweise kompensierenden oder umgehenden Strategie zu Regeneration weiter optimiert werden.

Eine vorteilhafte Ausbildung der Erfindung sieht vor, dass das Resultat, das durch den Algorithmus erzielt wird, ausgegeben wird, beispielsweise in Form einer elektronischen oder visuellen Übermittlung, oder gespeichert wird, beispielsweise auf einem elektronischen Datenträger. Somit ist es möglich, durch unabhängige externe Systeme oder menschliche Benutzer die Resultate des Algorithmus weiter zu verwerten oder zu überprüfen.

Gemäß der Erfindung wird die Regeneration der Trocknerpatrone an die Resultate des den Defekt diagnostizierenden Algorithmus angepasst. Dadurch kann die Funktionstüchtigkeit der Trocknerpatrone wiederhergestellt werden, auch wenn ein Defekt in dem Druckluftsystem vorliegt, sofern dieser durch eine Strategie bei der Regeneration beispielsweise umgangen oder kompensiert werden kann.

Eine besonders vorteilhafte Ausbildung der Erfindung sieht vor, dass durch den Algorithmus die Effektivität der Regeneration der Trocknerpatrone analysiert wird. Dies kann beispielsweise sensorisch über Messung des Flüssigkeitgehalts in der Trocknerpatrone und anschließender Auswertung der Messdaten geschehen. Somit kann die Effektivität der Trocknerpatrone gewährleistet, zumindest aber überprüft werden.

Gemäß einer bevorzugten Ausbildung der Erfindung gehört der durch den Algorithmus erkennbare Defekt zu einer Gruppe von Defekten, die Verstopfung, Vereisung, Verklemmung, Leckage, Blockade durch Fremdkörper oder Verschleiß einer Leitung, eines Ventils, eines Luftablasses, eines Schalldämpfers oder einer Trocknerpatrone umfasst. Dies sind in der Praxis möglicherweise auftretende Defekte, die in der Lage sind, die Regeneration zu stören oder zu verhindern.

Insbesondere kann das Ventil dabei einer Ventilgruppe zugehören, die Magnetventile, Rückschlagventile und Ablassventile umfasst. Diese bilden die wesentlichen Ventilformen eines die Erfindung betreffenden Druckluftsystems.

Die Erfindung sieht vor, dass die physikalische Größe einer Gruppe physikalischer Größen zugehört, die Temperatur, Flussrate, Dichte, Druck und Flussgeschwindigkeit unfasst. umfasst. Diese physikalischen Größen der Druckluft vermögen durch einen geeigneten Algorithmus Aussagen über die zuvor genannten relevanten Defekte zu treffen.

Weiter wird die vorliegende Erfindung verbessert, indem mindestens ein für das Nutzfahrzeug spezifischer Parameter in dem Algorithmus mit berücksichtigt wird. Dies können beispielsweise das Volumen von im oder am Druckluftsystem vorgesehenen Luftreservoirs, Bremskammerkonfigurationen, die Werte konstanten Luftverbrauchs im Betrieb oder andere insbesondere das Druckluftsystem betreffende Parameter sein. Dadurch ist es möglich, den Algorithmus auf verschiedene Fahrzeugtypen anzupassen um beispielsweise die Verlässlichkeit oder Genauigkeit der Analyse fahrzeugtypenspezifisch zu verbessern.

Weiter sieht eine Verbesserung der Erfindung vor, dass nicht nur das Auftreten sondern durch einen sogenannten reversiblen Algorithmus auch das Verschwinden eines Defektes erkannt wird, woraufhin entsprechende Maßnahmen für die Regenration getroffen werden können.

Eine weitere Verbesserung der Erfindung wird erreicht, indem der Algorithmus durch Parameter modifiziert wird, insbesondere automatisiert oder durch einen Benutzer. Somit kann die Funktionsweise des Algorithmus angepasst werden, ohne dass der Algorithmus geändert beziehungsweise dessen Quellcode umprogrammiert werden muss.

Weiter wird die Erfindung verbessert, indem Daten anderer Systeme, die das Druckluftsystem überwachen oder sensorisch erfassen, in die Analyse durch die Recheneinheit mit einbezogen werden. Dies betrifft beispielsweise Systeme, die das Druckluftsystem auf Lecks hin untersuchen oder überwachen.

### Beschreibung der Figur

Weitere die Erfindung verbessernden Maßnahmen werden nachstehend gemeinsam mit der Beschreibung eines bevorzugten Ausführungsbeispiels der Erfindung anhand der einzigen Figur näher dargestellt.

Die Figur zeigt den schematischen Ablauf eines Beispiels eines erfindungsgemäßen Druckluftsystems, in welchem ein Beispiel eines erfindungsgemäßen Verfahrens durchgeführt wird. Vorrichtungen sind durch Rechtecke, Daten durch Kreise, Luftströmungsverbindungen durch durchgezogene Linien, gerichtete Datenverbindungen durch gestrichelte Pfeile und Luftströmungsrichtungen durch durchgezogene Pfeile dargestellt.

### Detailbeschreibung der Figur

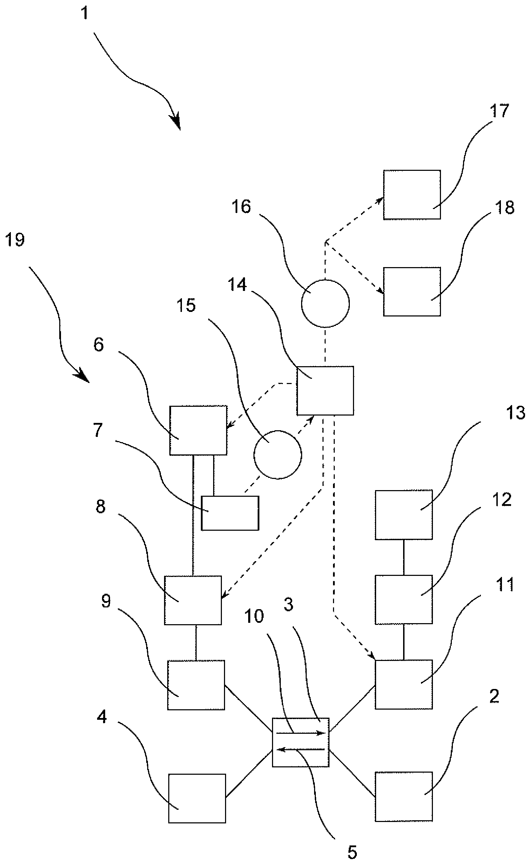

Gemäß Figur 1 ist innerhalb eines Druckluftsystems 1 eines nicht weiter dargestellten Kraftfahrzeugs ein Kompressorsystem 2 ausgangsseitig mit einer Trocknerpatrone 3 verbunden, die wiederum mit einem Verbrauchersystem 4 verbunden ist.

Im Betriebszustand pumpt das Kompressorsystem 2 Luft, die gegebenenfalls feucht ist, in einer Betriebsrichtung 5 durch die Trocknerpatrone 3, wo diese bis zur Sättigung der Trocknerpatrone 3 getrocknet wird, in das Verbrauchersystem 4.

Um die gegebenenfalls gesättigte Trocknerpatrone 3 zu regenerieren beziehungsweise zu trocknen, wird in einem Regenerationsbetrieb trockene Luft aus einem Regenerationsluftreservoir 6 über ein Magnetventil 8 und ein Rückschlagventil 9 in die Trocknerpatrone 3 geleitet. Diese wird dann in einer der Betriebsrichtung 5 entgegengesetzten Regenerationsrichtung 10 von trockener Luft durchströmt, wodurch die Regeneration beziehungsweise Trocknung der Trocknerpatrone durchgeführt wird. Dieser Luftstrom wird dann über ein Ablassventil 11 und einen Auslasskanal 12 und einen Schalldämpfer 13 an die Umgebung abgelassen. Die oben genannten Komponenten zwischen einschließlich Regenerationsluftreservoir 6 und Schalldämpfer 13 bilden den Regenerationspfad 19.

Kommt es nun zu einem Defekt, wie beispielsweise zu Verstopfung einer nicht dargestellten Luftleitung oder Verklemmung des Magnetventils 8 oder des Rückschlagventils 9 oder des Ablassventils 11 oder zu Einfrieren der Trocknerpatrone 3 oder zu sonstigen mechanischen Fehlern oder zu anderen beispielsweise verschleißbedingten Fehlfunktionen einer Komponente des Regenerationspfades 19, so verändert sich dadurch beispielsweise der Flusswiderstand des Regenerationspfades 19.

Erfindungsgemäß misst ein Sensor 7, in diesem Beispiel ein Drucksensor 7, eine physikalische Größe 15 des Regenerationspfades 19, in diesem Beispiel den Druck im Regenerationsluftreservoir 6. Der veränderte Flusswiderstand resultiert in einer Veränderung des zeitlichen Verlaufs des durch den Drucksensor 7 gemessenen Drucks. Beispielsweise fällt dieser langsamer als gewöhnlich ab, wenn das Magnetventil 8 verstopft ist.

Der Drucksensor 7 ist elektronisch mit einer Recheneinheit 14 verbunden. Die durch sensorische Erfassung des Drucksensors 7 gemessene physikalische Größe 15 wird an einen auf der Recheneinheit 14 ausgeführten Algorithmus übergeben, der unter Beachtung einprogrammierter Informationen über kraftfahrzeugspezifischer Parameter des Druckluftsystems 1 den Defekt analysiert, also dessen Ort, also die betreffende Komponente, und dessen Art feststellt und quantifiziert, beispielsweise den Flusswiderstand einer Verstopfung.

Das Resultat 16 der Analyse wird parallel durch Darstellung auf einem Ausgabemodul 17 in Form eines Monitors und parallel durch Speicherung auf einem Speichermodul 18 zur späteren Auswertung weiterverwertet. Außerdem steuert die Recheneinheit beispielsweise eine elektronisch regelbare Druckluftversorgung des Regenerationsluftreservoirs 6, das magnetische Ventil 8 oder das Ablassventil 11 an, um die Regeneration an den Defekt anzupassen.

Die Erfindung ist nicht beschränkt auf das vorstehend beschriebene bevorzugte Ausführungsbeispiel. Es sind auch Abwandlungen hiervon denkbar, welche vom Schutzbereich der nachfolgenden Ansprüche mit umfasst sind.

So ist es beispielsweise auch möglich, dass nicht die physikalische Größe Druck gemessen wird, sondern beispielsweise die Temperatur oder die Flussdichte von Luft in einer Komponente oder zwischen zwei Komponenten des Regenerationspfades. Das erfindungsgemäße Verfahren ist insbesondere auch dann anwendbar, wenn während der Regeneration kein Druckabfall im Regenerationsluftreservoir messbar ist. Auch kann der Defekt und der den Defekt aufzeigende Indikator ein gänzlich anderer sein, beispielsweise ein Absinken von Dichte durch ein Leck.

### Bezugszeichenliste

- 1: Druckluftsystem
- 2: Kompressorsystem
- 3: Trocknerpatrone
- 4: Verbrauchersystem
- 5: Betriebsrichtung
- 6: Regenerationsluftreservoir
- 7: Sensor
- 8: Magnetventil
- 9: Rückschlagventil
- 10: Regenerationsrichtung
- 11: Ablassventil
- 12: Auslasskanal
- 13: Schalldämpfer
- 14: Recheneinheit
- 15: physikalische Größe
- 16: Resultat
- 17: Ausgabemodul
- 18: Speichermodul
- 19: Regenerationspfad

## Patentansprüche

1. Verfahren zur Erkennung mindestens eines Defekts eines Regenerationspfades (19) eines Druckluftsystems (1) eines Kraftfahrzeugs, wobei zur Regeneration einer Trocknerpatrone (3) Luft aus einem Regenerationsluftreservoir (6) durch die Trocknerpatrone (3) geleitet wird, wobei mindestens eine physikalische Größe (15) der Luft in einer Komponente des Regenerationspfades (19) erfasst wird, wobei die physikalische Größe (15) einer Gruppe physikalischer Größen zugehört, die Temperatur, Flussrate, Dichte, Druck und Flussgeschwindigkeit umfasst, und die mindestens eine physikalische Größe (15) durch eine Recheneinheit (14) zur Defekterkennung analysiert wird, **dadurch gekennzeichnet, dass** das Resultat (16) der Analyse weiterverwertet wird, wobei die Weiterverwertung mit einschließt, dass die Regeneration der Trocknerpatrone (3) durch Steuerung durch die Recheneinheit (14) in Abhängigkeit vom Resultat (16) angepasst wird.

2. Verfahren nach Anspruch 1,
**dadurch gekennzeichnet, dass** die mindestens eine physikalische Größe (15) durch unmittelbare Erfassung durch einen Sensor (7) oder Erfassung durch einen Sensor (7) einer anderen physikalischen Größe und anschließender Berechnung oder Abschätzung oder durch elektronische Übermittlung gewonnen wird.

3. Verfahren nach Anspruch 2,
**dadurch gekennzeichnet, dass** der Sensor (7) die mindestens einen physikalischen Größe (15) in dem Regenerationsluftreservoir (6) erfasst.

4. Verfahren einem der vorherigen Ansprüche,
**dadurch gekennzeichnet, dass** die Art des Defekts durch die Recheneinheit (14) identifiziert wird.

5. Verfahren nach einem der vorherigen Ansprüche,
**dadurch gekennzeichnet, dass** eine quantifizierbare Eigenschaft des Defekts durch die Recheneinheit (14) quantifiziert wird.

6. Verfahren nach einem der vorherigen Ansprüche,
**dadurch gekennzeichnet, dass** die Weiterverwertung mit einschließt, dass das Resultat auf einem Ausgabemodul (17) ausgegeben wird oder auf einem Speichermodul (18) gespeichert wird.

7. Verfahren nach einem der vorherigen Ansprüche,
**dadurch gekennzeichnet, dass** durch die Recheneinheit (14) die Effektivität der Regeneration der Trocknerpatrone (3) analysiert wird.

8. Verfahren nach einem der vorherigen Ansprüche,
**dadurch gekennzeichnet, dass** der durch die Recheneinheit identifizierbare Defekt einer Gruppe von Defekten zugehört, die Verstopfung, Vereisung, Verklemmung, Blockade durch Fremdkörper oder Verschleiß einer Leitung, eines Ventils, eines Auslasskanals (12), eines Schalldämpfers (13) oder einer Trocknerpatrone (3) umfasst.

9. Verfahren nach Anspruch 8,
**dadurch gekennzeichnet, dass** das Ventil einer Ventilgruppe zugehört, die Magnetventile (8), Rückschlagventile (9) und Ablassventile (11) umfasst.

10. Verfahren nach einem der vorherigen Ansprüche,
**dadurch gekennzeichnet, dass** mindestens ein für das Nutzfahrzeug spezifischer Parameter von der Recheneinheit (14) mit berücksichtigt wird.

11. Verfahren nach einem der vorherigen Ansprüche,
**dadurch gekennzeichnet, dass** durch die Recheneinheit (14) das Verschwinden eines Defektes erkannt wird.

12. Verfahren nach einem der vorherigen Ansprüche,
**dadurch gekennzeichnet, dass** ein auf der Recheneinheit (14) ausgeführter Algorithmus durch Parameter modifiziert wird.

13. Verfahren nach einem der vorherigen Ansprüche,
**dadurch gekennzeichnet, dass** Informationen anderer mit dem Druckluftsystem (1) zusammenarbeitender Systeme, einschließlich eines Lecküberwachungssystems, zur Verbesserung der Genauigkeit der Analyse durch die Recheneinheit mit verwendet werden.

14. Vorrichtung zur Erkennung mindestens eines Defekts eines eine Trocknerpatrone (3) zur Trocknung von Druckluft umfassenden Druckluftsystems (1) eines Kraftfahrzeugs,
**dadurch gekennzeichnet, dass** diese eine Recheneinheit (14) zur Durchführung eines Verfahrens nach einem der vorherigen Ansprüche aufweist.

## Claims

1. Method for the recognition of at least one defect in a regeneration path (19) of a compressed-air system (1) of a motor vehicle, wherein for the regeneration of a drying cartridge (3) air from a regeneration-air reservoir (6) is passed through the drying cartridge (3),
wherein at least one physical variable (15) of the air is detected in a component of the regeneration path (19), the said physical variable (15) being one of a group of physical variables that includes the temperature, flow rate, density, pressure and flow velocity, and the at least one physical variable (15) is analysed by a computation unit (14) for the purpose of defect recognition, **characterised in that** the result (16) of the analysis is processed further, and the further processing brings about an adaptation of the regeneration of the drying cartridge (3) by control means implemented by the computation unit (14) as a function of the said result (16).

2. Method according to Claim 1,
**characterised in that** the at least one physical variable (15) is obtained by direct determination by means of a sensor (7), or determination by a sensor (7) of some other physical variable and subsequent calculation or estimation, or by electronic transmission.

3. Method according to Claim 2,
**characterised in that** the sensor (7) detects the at least one physical variable (15) in the regeneration-air reservoir (6).

4. Method according to any of the preceding claims,
**characterised in that** the type of defect is identified by the computation unit (14).

5. Method according to any of the preceding claims,
**characterised in that** a quantifiable property of the defect is quantified by the computation unit (14).

6. Method according to any of the preceding claims,
**characterised in that** the further processing includes transmitting the result by an output module (17) or storing it in a memory module (18).

7. Method according to any of the preceding claims,
**characterised in that** the effectiveness of the regeneration of the drying cartridge (3) is analysed by the computation unit (14).

8. Method according to any of the preceding claims,
**characterised in that** the defect that can be identified by the computation unit is one of a group of defects that includes clogging, icing, valve-sticking, blockage by foreign bodies, or wear of a line, a valve, an outlet duct (12), a noise damper (13) or a drying cartridge (3).

9. Method according to Claim 8,
**characterised in that** the valve is one of a group of valves that includes solenoid valves (8), non-return valves (9) and discharge valves (11).

10. Method according to any of the preceding claims,
**characterised in that** at least one parameter that is specific to the utility vehicle is taken into account by the computation unit (14).

11. Method according to any of the preceding claims,
**characterised in that** the disappearance of a defect is detected by the computation unit (14).

12. Method according to any of the preceding claims.
**characterised in that** an algorithm implemented in the computation unit (14) is modified by parameters.

13. Method according to any of the preceding claims,
**characterised in that** information from other systems that co-operate with the compressed-air system (1), including a leak monitoring system, is also used by the computation unit in order to improve the accuracy of the analysis.

14. Device for the recognition of at least one defect in a compressed-air system (1) of a motor vehicle that comprises a drying cartridge (3) for drying compressed air,
**characterised in that** the said device comprises a computation unit (14) for carrying out a method according to any of the preceding claims.

## Revendications

1. Procédé de détection d'au moins un défaut d'un trajet (19) de régénération d'un système (1) à air comprimé d'un véhicule automobile , dans lequel , pour la régénération d 'une cartouche (3) de sécheur , on envoie de l'air d'un réservoir (6) d'air de régénération dans la cartouche (3) de sécheur ,
dans lequel on relève au moins une grandeur (15) physique de l 'air dans une partie du trajet (19) de régénération , la grandeur (15) physique appartenant au groupe des grandeurs physiques qui comprend la température , le débit , la masse volumique , la pression et la vitesse du flux et on analyse la au moins une grandeur (15) physique par une unité (14) informatique pour la détection d'un défaut , **caractérisé en ce que** l'on réutilise le résultat (16) de l'analyse , la réutilisation incluant que la régénération de la cartouche (5) du sécheur soit adaptée par commande par l'unité (14) informatique en fonction du résultat (16) .

2. Procédé suivant la revendication 1 ,
**caractérisé en ce que** l'on obtient la au moins une grandeur (15) physique en la relevant directement par un capteur (7) ou en la relevant par un capteur d'une autre grandeur physique et ensuite en la calculant ou en l'évaluant ou par transmission électronique .

3. Procédé suivant la revendication 2 ,
**caractérisé en ce que** le capteur (7) relève la au moins une grandeur (15) physique dans le réservoir (6) d'air de régénération .

4. Procédé suivant l'une des revendications précédentes ,
**caractérisé en ce qu'**on identifie le type du défaut par l 'unité (14) informatique .

5. Procédé suivant l'une des revendications précédentes ,
**caractérisé en ce que** l'on quantifie une propriété quantifiable du défaut par l'unité (14) informatique .

6. Procédé suivant l'une des revendications précédentes ,
**caractérisé en ce que** la réutilisation inclut que l'on sorte le résultat sur un module (17) de sortie ou qu'on le mette en mémoire sur un module (18) de mise en mémoire .

7. Procédé suivant l'une des revendications précédentes ,
**caractérisé en ce que** l'on analyse par l'unité (14) informatique l'efficacité de la régénération de la cartouche (3) de sécheur .

8. Procédé suivant l'une des revendications précédentes ,
**caractérisé en ce que** le défaut identifiable par l'unité informatique appartient à un groupe de défauts qui comprend l 'engorgement , le givrage , le coincement , le blocage par des corps étrangers ou l'usure d'un conduit , d'une soupape , d 'un canal (12) de sortie , d'un silencieux (13) ou d'une cartouche (3) de sécheur .

9. Procédé suivant la revendication 8 ,
**caractérisé en ce que** la soupape appartient à un groupe de soupape qui comprend les électrovannes (8), les clapets antiretour (9) et les soupapes de décharge .

10. Procédé suivant l'une des revendications précédentes ,
**caractérisé en ce qu'**au moins un paramètre spécifique au véhicule utilitaire est pris en compte par l'unité (14) informatique .

11. Procédé suivant l'une des revendications précédentes ,
**caractérisé en ce que** l'on détecte par l'unité (14) informatique que le défaut a disparu .

12. Procédé suivant l'une des revendications précédentes ,
**caractérisé en ce que** l'on modifie par un paramètre un algorithme exécuté sur l'unité (14) informatique .

13. Procédé suivant l'une des revendications précédentes ,
**caractérisé en ce qu'**on utilise des informations d'autres systèmes coopérants avec le système (1) à air comprimé y compris un système de contrôle de fuite pour améliorer la précision de l'analyse par l'unité informatique .

14. Système de détection d'au moins un défaut d'un système (1) à air comprimé , comprenant une cartouche (3) de sécheur pour sécher de l'air comprimé , d'un véhicule automobile ,
**caractérisé en ce qu'**il a une unité (14) informatique pour effectuer un procédé suivant l'une des revendications précédentes .
